# EUROPÄISCHE PATENTSCHRIFT

(11) **EP 3 292 449 B1**
(45) Veröffentlichungstag und Bekanntmachung des Hinweises auf die Patenterteilung: **20.02.2019**
(21) Anmeldenummer: 16731806.2
(22) Anmeldetag: 06.05.2016
(51) Int. Cl.: G05D 16/06, F16K 37/00

(54) **REGLER OHNE HILFSENERGIE**
CONTROLLER WITHOUT AUXILIARY ENERGY
RÉGULATEUR SANS ÉNERGIE AUXILIAIRE

(30) Priorität: 07.05.2015 DE 102015005921
(43) Veröffentlichungstag der Anmeldung: 14.03.2018
(73) Patentinhaber: Samson Aktiengesellschaft, 60314 Frankfurt am Main (DE)
(72) Erfinder: LÄSSLER, Rudolf, 63477 Maintal (DE)
(74) Vertreter: Schmid, Nils T.F.
(86) Internationale Anmeldenummer: PCT/EP2016/060164
(87) Internationale Veröffentlichungsnummer: WO 2016/177874

(56) Entgegenhaltungen:
- CN-U- 204 254 011
- DE-A1-102008 011 701
- DE-A1-102010 050 662
- DE-B3-102012 003 231
- GB-A- 2 449 680
- US-A1- 2003 233 203

## Beschreibung

Die Erfindung betrifft einen Regler ohne Hilfsenergie (ROH) zum Regeln einer Arbeitsfluidströmung, insbesondere einer prozesstechnischen Anlage, wie einer Anlage von Gas-, Warmwasser-, insbesondere Abwasser- und/oder Wärmeversorgern, oder einer Heizungs- und/oder Kühlungsanlage insbesondere einer Immobilie, einer Energie-Fernheizanlage oder dergleichen, oder einer Anlage zum Heizen und Kühlen von Prozessfluiden, insbesondere Industrieprozessfluiden. Regler ohne Hilfsenergie werden auch in explosionsgefährdeten Anlagen eingesetzt, weil die fehlende zusätzliche Hilfsenergie eine deutliche Reduktion der Explosionsgefahr bewirkt.

DE 10 2012 003 231 betrifft ein Prozessventil.

Ein Regler ohne Hilfsenergie benötigt keine externe Energieversorgung zum Betreiben des Reglers, insbesondere keine Stromversorgung und keine Pneumatik, wie keine externe pneumatische Dauerdruckversorgung, um den voreingestellten oder variierenden Regelungs- oder Steuerungsalgorithmus zu realisieren. Der Regler ohne Hilfsenergie umfasst ein Stellventil und einen Stellantrieb, der zum mechanischen Betätigen des Stellventils ausgelegt ist, wobei die Versorgungsenergie für die Bereitstellung einer entsprechenden Betätigungskraft zum Stellen des Stellventils ausschließlich von der einzustellenden Arbeitsfluidströmung oder dem Arbeitsfluid als solches geschöpft wird. Hierdurch unterscheidet sich ein Regler ohne Hilfsenergie für prozesstechnischen Anlagen von einem Regler mit Hilfsenergie dadurch, dass eben keine zusätzlich (zusätzlich zu der im Arbeitsfluid oder in der Arbeitsfluidströmung bereits vorliegenden Energie) beizusteuernde Betriebsenergie, wie Strom oder Pneumatik, dem Regler zugefügt werden muss, um seine Stellaufgabe, wie auch seine Mess- und/oder Regelungsfunktion, erledigen zu können.

Die Regelung/Steuerung eines Reglers für eine prozesstechnische Anlage umfasst insbesondere ausschließlich drei wesentliche Funktionen, nämlich das Messen einer Betriebsgröße, das Regeln der Betriebsgröße und die Durchführung der Stellbewegung gemäß einer Regelungs- und/oder Steuerungsroutine. Da der Regler ohne Hilfsenergie keine externe Hilfsenergieversorgung in Anspruch nimmt, sind die Betriebskosten und auch die Installationskosten wegen der fehlenden zusätzlichen Energieversorgung gering.

Um die Funktionsweise des Reglers ohne Hilfsenergie sicherzustellen, kommt es darauf an, die Bauteile zu den oben genannten Hauptfunktionen richtig zu koordinieren. Ein Regler ohne Hilfsenergie bewährt sich als kostengünstiges und betriebsrobustes Bauelement. Gerade in sicherheitsrelevanten Einsatzgebieten wird der Regler ohne Hilfsenergie häufig verwendet, weil er selbst bei Ausfall der Betriebsenergieversorgung zuverlässig weiterarbeiten kann.

Es ist Aufgabe der Erfindung, Nachteile des Standes der Technik zu überwinden, insbesondere einen Regler ohne Hilfsenergie zum Regeln einer Arbeitsfluidströmung insbesondere einer prozesstechnischen Anlage dahingehend zu verbessern, dass die korrekte Funktionsweise des Reglers ohne Hilfsenergie, insbesondere was dessen Regelung/Steuerung und/oder die Feldfunktion betrifft, überprüfbar ist, ohne das Grundprinzip einer fehlenden externen Energieversorgung abändern zu müssen.

Diese Aufgabe wird durch die Merkmale von Anspruch 1 gelöst.

Danach ist ein Regler ohne Hilfsenergie zum Regeln einer Arbeitsfluidströmung, insbesondere einer prozesstechnischen Anlage, wie einer Gas-, Wasser- und/oder Wärmeversorgungsanlage, insbesondere einer Heizungs- und/oder Kühlungsanlage vorzugsweise der Gebäudetechnik oder einer Energie-Fernheizanlage, vorgesehen. Der Regler ohne Hilfsenergie gemäß der Erfindung kann zur Temperatur-, Druck-, Volumenstrom- oder Differenzdruckregelung herangezogen werden. Der Regler ohne Hilfsenergie hat ein Stellventil, das insbesondere gegenüber einem Ventilsitz einen Durchflussquerschnitt der Arbeitsfluidströmung verändern kann, und einen Stellantrieb, der derart zum Betätigen des Stellventils ausgelegt ist, dass Versorgungsenergie für die Bereitstellung der Betätigungskraft ausschließlich von der Arbeitsfluidströmung und/oder dem Arbeitsfluid herangezogen wird. Insbesondere nimmt sich der Regler ohne Hilfsenergie unterschiedliche Betriebsgrößen der Arbeitsfluidströmung, wie Druckdifferenz und Temperaturdifferenz, aber auch Dichteunterschiede als Energiequelle zu Nutze. Aus den unterschiedlichen physikalischen Parametern der Arbeitsfluidströmung kann durch entsprechende Energieumwandlung ausreichend Energie bereitgestellt werden, um das Stellen des Stellventils unter der Maßgabe beispielsweise einer konstanten Sollwert-/Istwert-Vergleichsregelung zu betreiben.

Erfindungsgemäß hat der Regler ohne Hilfsenergie eine Magnetfeldquelle, wie einen Magneten, insbesondere einen Dauermagneten, die derart mit dem Stellventil strukturell gekoppelt ist, dass sie der Bewegung des Stellventils folgt und deren Bewegung mittels eines Magnetsensors erfasst werden kann, um die Stellung des Stellventils insbesondere relativ zu dem Ventilsitz zu ermitteln. Dabei kann der Magnetsensor auch Teil des Reglers ohne Hilfsenergie sein. Der Magnetsensor muss erfmdungsgemäß allerdings nicht bereits an dem Regler ohne Hilfsenergie angebaut sein, sondern kann beispielsweise für ein nachträgliches Montieren, Upgraden und/oder für kurzweilige Mess-Einsätze an bereits existierenden Reglern ohne Hilfsenergie insbesondere abnehmbar angebaut werden. Hierzu kann der Regler ohne Hilfsenergie eine Andock- oder Aufnahmestation aufweisen, die mit einem mobilen insbesondere standardisierten Magnetsensor, wie ein AMR-Sensor, orts- oder reglergehäusefest belegt werden kann. Die Andockstation kann an einem Gehäuseteil des Reglers, wie dem Stellventilgehäuse oder dem Stellantriebgehäuse oder einem Teil davon ausgebildet sein, um eine ortsfeste Andock-Position des Magnetsensors insbesondere relativ zu der dazu beweglich gelagerten, insbesondere von dem Gehäuse geschützten und geführten Magnetfeldquelle sicherzustellen. Der Magnetsensor oder eine Magnetsensoreinheit, welche neben dem Magnetsensor weitere Elektronikkomponenten oder Logikbausteine, wie Auswerteeinrichtung etc. aufweisen kann, muss nicht dauerhaft mit dem erfindungsgemäßen Regler gekoppelt sein. Vielmehr könnte die Andockstation an dem Gehäuse des Reglers lediglich für ein kurzfristiges Andocken und ortsfestes Positionieren eines mobilen Handmagnetsensors (handheld) ausgelegt sein, damit eine Bedienperson die mobile Magnetsensor-Geräteeinheit an dem Reglergehäuse ortsfest ansetzen und halten kann, um unmittelbar anhand des ständigen Magnetfeldes der Magnetfeldquelle die aktuelle Position des Stellventils zu erfassen. Nach der Messung kann die Bedienperson den Magnetsensor oder die Magnetsensoreinheit abnehmen und eine nächste Messung an einem anderen Regler ohne Hilfsenergie durchführen. Damit die Logikbauteile oder Auswerteeinrichtungen der Magnetsensoreinheit spezifische Besonderheiten und Alleinstellungsmerkmale des zu überprüfenden Reglers erkennen kann, hat die Magnetsensoreinheit ein Auslesegerät, welche beispielsweise an der Außenseite des Reglers angebrachten spezifischen Geräteinformationen, wie einen Barcode, auslesen kann, damit anschließend die gerätindividuelle Messung durch den insbesondere standardisierten Magnetsensor oder die insbesondere standardisierte Magnetsensoreinheit möglich ist.

Der Magnetsensor kann Teil des Reglers ohne Hilfsenergie sein, insbesondere entweder direkt an der Außenseite des Reglergehäuses angebracht sein, oder sogar an dessen Innenseite liegen, wobei eine entsprechende Datenübertragungsfunktion nach außen vorgesehen sein sollte. Der Sensor braucht keine eigenständige Energiequelle aufweisen, vielmehr kann die Energiequelle beispielsweise durch eine Bedienperson mobil an dem Regler ohne Hilfsenergie angesetzt werden, so dass kurzfristig und kontaktlos Versorgungsenergie dem Sensor mitgeteilt wird. Nur in dem kurzen Augenblick der Energieversorgung wird die Stellungserfassung vorgenommen.

Bei einer bevorzugten Ausführung der Erfindung kann der Magnetsensor auch durch eine Magnetnadel, wie Kompassnadel, realisiert sein, die je nach Position des an dem Stellventil angebrachten Magneten, insbesondere Dauermagneten, den Magnetfeldlinien des Dauermagneten folgt, so dass die Position durch die Magnetnadel visuell angezeigt werden kann.

Sollte der Magnetsensor bereits an dem Regler ohne Hilfsenergie angebracht sein, kann eine Initialisierung der Positionsmessung vorab vorgenommen werden. Für den Fall, dass der Magnetsensor extern anzubringen ist, ist ein Positionsanschlag zur Initiierung der Positionsmessung vorzusehen. Es sei klar, dass die Magnetfeldquelle auch durch inkrementelle Magnetabschnitte an einer Stellventilstange angeordnet sein kann, um ein inkrementelles Messergebnis bereitzustellen.

Bei einer bevorzugten Ausführung der Erfindung ist die Andockstation für den Magnetsensor derart ausgebildet, dass eine festgelegte Axial- und Radialposition des anzudockenden Magnetsensors relativ zu der Magnetfeldquelle festgelegt ist, wenn der Magnetsensor in der Andockposition fest eingesetzt ist. Insbesondere hat die Magnetsensorandockaufnahme eine Feststelleinrichtung zum insbesondere lösbaren Fixieren des Magnetsensors in der angedockten Position. Vorzugsweise umfasst die Andockstation ein translatorisches Gleitlager, über das der Magnetsensor oder die Magnetsensoreinheit in eine Andockendposition einsetzbar sind, wobei ein Andockanschlag die Endposition in translatorischer Aufsetzrichtung begrenzt. Anschließend kann eine Feststelleinrichtung ein Verschieben des Magnetsensors entgegen der Aufsetzrichtung verhindern, um den Magnetsensor oder die Magnetsensoreinheit ortsfest zu der sich dazu relativ bewegenden Magnetfeldquelle zu halten. Dabei können vorzugsweise zylindrische Lagergleitflächen sowohl an dem Reglergehäuse als auch an dem Magnetsensorgehäuse gemäß einer Vorsprung/Rücksprung/Anordnung ausgebildet sein. Auch die Bedienperson kann den Messsensor während der Messung festhalten.

Vorzugsweise ist die Gehäusestruktur der Regler (ROH) insbesondere zumindest längs einer Bewegungsspanne oder -amplitude des Magneten durch ein nicht-magnetisches Material gebildet, damit das von der Magnetfeldquelle erzeugte Magnetfeld durch das die Magnetfeldquelle umgebenden Gehäuse unbeeinträchtigt bleibt. Als Beispiel für nicht-magnetische Materialien können angesehen werden: Aluminium, austenitischer Stahl, Messing, Bronze, Kunststoff oder dergleichen.

Vorzugsweise ist die Magnetfeldquelle an einer mit dem Stellventil kraftschlüssig gekoppelten Stellstange befestigt oder vollständig durch Stellstangenmaterial umgebend untergebracht, wobei insbesondere eine Montagestelle der Magnetfeldquelle an der Stellstange im Bereich eines axialen, dem Stellventil gegenüberliegenden Ende der Stellstange und/oder an einem von dem Stellventil abgewandten Seite des Stellantriebs positioniert ist.

Bei einer Weiterbildung der Erfindung ist vorgesehen, dass die Magnetfeldquelle innerhalb eines insbesondere nicht-magnetischen Endabschnitts eines Kraftübertragungsteils des Stellantriebs angeordnet ist, die mit dem Stellventil kraft- oder bewegungsschlüssig verbunden ist, wobei insbesondere das nicht-magnetische Material des Endabschnitts Aluminium, austenitischer Stahl, Messing, Bronze, Kunststoff oder dergleichen ist, wobei insbesondere die Magnetfeldquelle von dem nicht-magnetischen Material insbesondere vollständig umgeben, insbesondere umspritzt, ist. Beispielsweise könnte ein Dauermagnet von einem eine Stellstange bildenden Aluminiummaterial oder Kunststoff umgebend eingebettet sein. Auf diese Weise ist die Magnetfeldquelle von äußeren und inneren Korrosionseinflüssen geschützt.

Bei einer bevorzugten Ausführung der Erfindung umfasst der erfindungsgemäße Regler ohne Hilfsenergie den Magnetsensor, der derart vorzugsweise außerhalb eines Gehäuses angeordnet ist, dass noch eine Relativbewegung zwischen dem Magnetsensor und der Magnetfeldquelle erfassbar ist. Bei dieser Ausführung kann die oben beschriebene Andockstation bereits durch einen Magnetsensor belegt sein. Dabei kann die Anordnung des Magnetsensors in der Andockstation permanent sein oder lösbar sein, um den Magnetsensor austauschen zu können.

Während die Magnetfeldquelle innerhalb des Gehäuses, wie des Stellventilgehäuses, des Stellantriebgehäuses oder einer anderen Gehäusestruktur, welche beispielsweise eine Laternenstruktur oder ein Reglergehäuse bilden kann, untergebracht ist, liegt der Magnetsensor insbesondere außerhalb des Gehäuses.

Bei einer Weiterbildung der Erfindung ist der Magnetsensor mit einer Anzeige und/oder einer Auswerteeinrichtung insbesondere signalübertragungsgemäß gekoppelt. Die Anzeige dient zur Visualisierung von ermittelten Stellungssignalen, wobei insbesondere eine Auswerteeinrichtung zusätzlich eine weite Regelungs- oder Überwachungsfunktion übernehmen kann. Vorzugsweise ist die Auswerteeinrichtung durch einen Mikrochip gebildet, der entweder von einer Arbeitsfluid-Energieversorgung des Reglers ohne Hilfsenergie betrieben wird oder eine autarke Energieversorgung beispielsweise mittels einer Batterie oder eines Akkus aufweist.

Vorzugsweise ist die Kommunikation zwischen dem Magnetsensor, der Auswerteeinheit und/oder der Anzeige über ein Kabel oder kabellos über entsprechende Signalübertragung, realisiert.

Bei einer bevorzugten Weiterbildung der Erfindung ist die Magnetfeldquelle benachbart dem Stellventil, insbesondere benachbart einem Drosselkörper des Stellventils, angebracht, so dass insbesondere der Magnetsensor im Bereich der Anordnung der Magnetfeldquelle an der Außenseite des Stellventilgehäuses untergebracht ist. Zum Schutz des Magnetsensors kann ein eigenes Gehäuse vorgesehen sein, das unter Umständen eine transparente Außenhülle aufweist, um Informationen des Magnetsensors extern visuell aufnehmen zu können.

Vorzugsweise ist der Magnet an dem Kraftübertragungsteil des Reglers ohne Hilfsenergie lösbar befestigt.

Bei einer bevorzugten Ausführung der Erfindung hat die Magnetsensoreinheit eine bestehend aus der Magnetfeldquelle und dem Magnetsensor eine eigene elektrische Energieversorgung, die vorzugsweise durch eine Batterie oder einem elektrischen Akkumulator realisiert ist.

Bei einer bevorzugten Ausführung der Erfindung umfasst der Magnetsensor, insbesondere die Andockstation des Magnetsensors, eine Kommunikationsschnittstelle zum Übertragen von Daten, insbesondere von Stellungssignalen, an eine Leitstation oder eine Leitwarte. Die Kommunikationsschnittstelle kann eine Einrichtung zum kabellosen Senden der Daten an eine externe Station, wie Leitstation oder Leitwarte, aufweisen.

Bei einer bevorzugten Ausführung der Erfindung ist die Magnetsensoreinheit, insbesondere die Auswerteeinheit, dazu ausgelegt, zur Identifikation des jeweiligen Reglers die nötigen Daten auszulesen, vorzugsweise mittels RFID-, NCF-, QR-Code oder Barcode-Daten.

Bei einer Weiterbildung der Erfindung ist die Magnetsensoreinheit, insbesondere die Auswerteeinheit dazu ausgelegt, bei jeder Inbetriebnahme des Reglers einen Kalibrationslauf auszuführen.

Vorzugsweise hat die Magnetsensoreinheit einen Speicher zum Ablegen von Messdaten des jeweiligen Reglers. Der Speicher kann insbesondere Teil der Auswerteeinrichtung sein. Der Speicher kann von der autarken Energiequelle der Magnetsensoreinheit betrieben werden.

Des Weiteren betrifft die Erfindung ein Positionssensorsystem gemäß Anspruch 10 mit wenigstens einem insbesondere oben genannten erfindungsgemäß ausgebildeten Regler ohne Hilfsenergie zum Regeln einer Arbeitsfluidströmung insbesondere einer prozesstechnischen Anlage, vorzugsweise eine Vielzahl von Reglern ohne Hilfsenergie. Des Weiteren hat das erfindungsgemäße Positionssensorsystem eine Magnetsensoreinheit oder den Magnetsensor, die/der dazu ausgelegt ist, ein Magnetfeld einer Magnetfeldquelle, zu erfassen. Die Magnetfeldquelle ist der Bewegung des Stellventils des Reglers folgend angeordnet und erzeugt ein Magnetfeld, das durch den Magnetsensor zu erfassen ist. Auf der Basis der Bewegung des Magnetfeldes relativ zu dem insbesondere ortsfest an dem Regler angeordneten Magnetsensor kann die Position der Magnetfeldquelle und damit des Stellventils des Reglers erfasst werden. Die Magnetsensoreinheit ist an einem Träger angebracht, der dazu ausgelegt ist, mit dem Reglergehäuse, insbesondere Stellventilgehäuse, Stellantriebsgehäuse oder einer das Stellventilgehäuse mit dem Stellantriebsgehäuse verbindenden Gehäusestruktur dahingehend zusammenzuwirken, dass eine ortsdefinierte Einsatzposition der Magnetsensoreinheit relativ zum Reglergehäuse erreicht ist. Alternativ kann der Sensor (der Magnetsensor / die Sensoreinheit) bereits innerhalb des Reglers, vorzugsweise des Reglergehäuses, reglerindividuell vormontiert sein, so dass jeder Regler einen Sensor aufweist, der sich in dem Magnetfeld des sich bewegenden Magneten befindet. Dabei kann der Sensor eine eigene Energiequelle, wie eine elektrische Batterie oder einen elektrischen Akkumulator, aufweisen oder auch frei von einer eigenen Energiequelle sein. Dieser Sensor ohne Energiequelle kann energetisch versorgt werden, indem eine kontaktlose elektrische Energieversorgung durch eine Spulenanordnung um die Außenseite der Gehäusestruktur des Reglers ohne Hilfsenergie angebracht ist. Hierzu sollte vorzugsweise ein nicht-magnetisches Material den Gehäuseabschnitt bilden, benachbart dem der Sensor und die Energieversorgungsspule liegt. Bei dieser alternativen Ausführung ist es notwendig, dass die äußere Gehäusestruktur des Reglers einen axialen Anschlag aufweist, um die energiebereitstellende Spule im Hinblick auf den zu energetisierenden Sensor ausreichend, insbesondere vorzugsweise optimal, zu positionieren. Auf diese Weise wird der Sensor lediglich dann energetisiert, wenn die Messung beispielsweise von einer Bedienperson durchgeführt wird. Vorzugsweise ist der Träger dazu ausgelegt, an eine Vielzahl von gleichen und ähnlichen Gehäusestrukturen anzudocken, damit eine ortsfeste Relativposition der Magnetsensoreinheit bezüglich des Reglergehäuses erreicht ist. Insbesondere kann das Reglergehäuse eine sensorprofilangepasste Andockstation zum Aufnehmen der Magnetsensoreinheit aufweisen. Vorzugsweise sind die Andockstationen der Vielzahl von Reglern identisch oder ähnlich aufgebaut, so dass ein und derselbe Träger der betrachteten Magnetsensoreinheit an die Andockstationen für die ortsfeste Positionierung andockbar ist.

Mit der mobilen Magnetsensoreinheit kann eine Bedienperson von Regler zu Regler gehen, um die Position des spezifischen Stellventils zu erfassen. Um reglerspezifische Eigenheiten zu berücksichtigen, kann die Magnetsensoreinheit eine Ausleseeinrichtung aufweisen, mit der gerätespezifische Informationen aufgenommen und ausgewertet werden können. Hierzu kann die Magnetsensoreinheit einen Barcode-Erkenner aufweisen, der einen an der Außenseite des Reglergehäuses befindlichen Barcode abscannen kann, um die gerätespezifischen Informationen zu erhalten.

Mit dem erfindungsgemäßen Positionssensorsystem ist es möglich, mit ein und derselben insbesondere mobilen oder handheld Magnetsensoreinheit eine Vielzahl von Reglern ohne Hilfsenergie zu überwachen, indem eine Bedienperson unter Ausnutzung der Andockstation die Magnetsensoreinheit positioniert und die Position der Magnetfeldquelle, ergo des Stellventils, zu erfassen.

In den Unteransprüchen sind weitere bevorzugte Aspekte der Erfindung angegeben.

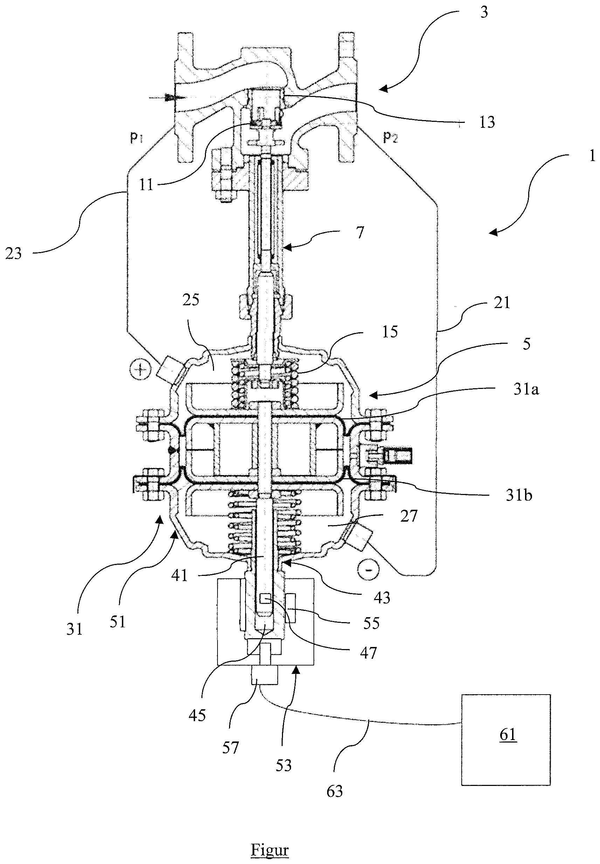

Weitere Eigenschaften, Vorteile und Merkmale der Erfindung werden durch die folgende Beschreibung einer bevorzugten Ausführung der Erfindung anhand der beiliegenden Zeichnung beschrieben, in der eine schematische Prinzipskizze eines erfindungsgemäßen Reglers ohne Hilfsenergie dargestellt ist.

In der Figur ist der erfindungsgemäße Regler ohne Hilfsenergie im Allgemeinen mit der Bezugsziffer 1 versehen. Bei dem in der Figur dargestellten Regler 1 ist die besondere Ausführung eines Druckminderers oder Druckreglers dargestellt, bei dem eine Rollmembrankonstruktion im Stellantrieb 5 des Reglers 1 direkt oder indirekt mit dem Betriebsdruck des Mediums/Arbeitsfluids beaufschlagt wird, das geregelt werden soll. Im Allgemeinen wird bei einem Regler 1 ohne Hilfsenergie die Energie des Mediums entnommen, dessen Zustand geregelt werden soll. Bei dem dargestellten Beispiel wird mit Hilfe des Mediumdrucks (kann aktiv auch unter Ausnutzung der thermischen Stoffeigenschaften des Mediums) ein Stelldruck durch den Regler 1 ohne Hilfsenergie aufgebaut, der die erforderliche Stellkraft erzeugt und an das Stellventil 3 abgibt.

In der Figur ist das Stellventil mit der Bezugsziffer 3 versehen, während der Stellantrieb die Bezugsziffer 5 erhält. Das Stellventil 3 ist mit dem Stellantrieb 5 über eine rohrförmige Gehäusestruktur 7 tragend aneinander befestigt. Das Stellventil 3 hat einen Ventilkörper 11, der in Bezug auf einen Ventilsitz 13 eine Druckdifferenz über den zwischen dem Sitz und dem Kegel freigebende Durchgangsfläche beeinflussen kann. Beispielsweise kann in einem Ruhezustand das Stellventil 3 durch die Kraft von Federn 15 geschlossen sein.

Bei einer Druckdifferenz (p₁-p₂) von beispielsweise 0,2 bar oder 0,3 bar oder 0,35 bar oder 0,4 bar oder 0,5 bar oder 0,55 bar bis 2 bar kann das Stellventil 3 insbesondere vollständig geöffnet werden. Dabei muss der Vordruck p₁ größer als der Nachdruck p₂ sein. Steigt der Druck p₂ hinter dem Stellventil 3 und erreicht oder überschreitet er den Vordruck, schließt das Gerät automatisch auch unter dem Einfluss der vorgespannten Feder 15.

Über fest installierte Steuerleitungen 21, 23 wird der Stellantrieb 5 angesteuert, der zwei Arbeitskammern 25, 27 aufweist. Die p₂-Leitung 21 ist mit der Arbeitskammer 27 gekoppelt, während die p₁-Leitung mit der Rückstellkammer 25 gekoppelt ist. Eine bewegliche Doppelmembranstruktur 31 trennt die beiden Kammern 25, 27. Die Doppelmembranstruktur 31 umfasst ein Stellmembran 31a, der mit dem (positiven) Stelldruck p₁ beaufschlagt ist. Ein Stellmembran 31b ist mit dem Minusdruck p₂ über die p₂-Leitung 21 beaufschlagt. Wie oben beschrieben ist, betätigt der Stellantrieb 5 das Stellventil 3 bei einem Überdruck von p₁-p₂ abhängig von einem Auslösedruck, der durch das Wechselspiel zwischen Druckkammer und Arbeitsfläche sowie der Federkonstante der eingesetzten Arbeitsfeder 15 eingestellt werden kann. Die Doppelmembranstruktur 31 ist über eine von dem Stellventil 3 abgewandte Stellstange 41 gekoppelt, die vollständig in einem nicht-magnetischen Gehäuse 43 geführt ist. An dem axialen Ende der Stellstange 41 ist ein Führungsbereich vorgesehen, der gemäß einer Gleitführung das axiale Ende 45 der Stellstange in deren Längsrichtung führt. An diesem axialen Ende 45 ist zusätzlich ein Dauermagnet 47 untergebracht, der ein Magnetfeld generiert, welches das nicht-magnetische Material des Gehäuses 43 ohne weiteres durchsetzen kann.

An der Außenseite des nicht-magnetischen Gehäuseteils 43 des Antriebsgehäuses 51 ist ein Magnetsensor 53 angeordnet, der ein Hall-Element oder einen AMR-Sensor 55 aufweisen kann. Der Magnetsensor 53 kann an das zapfenförmige Gehäuseende 43 des Antriebsgehäuses 51 lösbar aufgesetzt werden, wobei in der in der Figur dargestellten Andockposition eine Beweglichkeit des Magnetsensors 53 relativ zu dem Antriebsgehäuse 51 durch eine nicht näher dargestellte lösbare Befestigungseinrichtung verhindert ist. Der Magnetsensor 53 hat außerdem eine Kommunikationsschnittstelle 57, der mit einer Auswerte- und Anzeigeeinrichtung 61 gekoppelt ist.

Bei einer Axialbewegung der Stellstange 41 relativ zu dem Hall-Sensor oder AMR-Sensor 55 wird die Änderung des damit einhergehenden Feldes erfasst und als Positionsänderung über die Kommunikationsschnittstelle 57 an die Auswerte- und Anzeigeeinheit 61 übertragen.

In der Figur ist die Übertragung der Positionssignale über ein Kabel an die Auswerte- und Anzeigeeinheit realisiert 61. Es sei klar, dass auch eine kabellose Signalübertragung in Betracht steht.

Der Magnetsensor 53 kann dazu ausgelegt sein, mit einer Vielzahl von Reglern messtechnisch kompatibel zu sein, sollten diese nur eine Magnetfeldquelle aufweisen, die der Bewegung des Stellventils zumindest auf eine vorhersehbare Weise folgt. Dabei kann der Magnetsensor 53, insbesondere dessen Träger, derart ausgestaltet sein, dass er an die Vielzahl von Reglern positionssicher andocken kann, um die Relativbewegung der Magnetfeldquelle zu erfassen. Dabei kann eine zylindrische Aufnahme des Trägers bezüglich einer zylindrischen Eingreifstruktur des Reglergehäuses 43 vorgesehen sein, um ein axiales Aufsetzen sicherzustellen, wobei die axiale Fixierung des Magnetsensors 53 relativ zu dem Gehäuse 43 beispielsweise zusätzlich durch eine nicht näher dargestellte Klemmeinrichtung realisierbar ist.

Eine Bedienperson kann den mobilen Magnetsensor 53 von Regler zu Regler tragen und dann unmittelbar Messungen bezüglich der Position des Stellventils 3 vornehmen. Sollten gerätespezifische Informationen notwendig sein, kann der Magnetsensor eine Ausleseeinrichtung (nicht näher dargestellt) aufweisen, mit der beispielsweise eine an der Außenseite des Reglergehäuses 43 angebrachte Informationsquelle ausgelesen werden kann.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Regler ohne Hilfsenergie
- 3: Stellventil
- 5: Stellantrieb
- 7: Kopplungsstruktur
- 11: Ventilkörper
- 13: Ventilsitz
- 15: Feder
- 21, 23: Steuerleitung
- 25,27: Arbeitskammer
- 31: Doppelmembranstruktur
- 31a, 31b: Stellmembran
- 41: Stellstange
- 45: axiales Ende
- 43: nicht-magnetisches Gehäuse
- 47: Dauermagnet
- 51: Antriebsgehäuse
- 53: Magnetsensor
- 55: Hall-Sensor, AMR-Sensor
- 57: Kommunikationsschnittstelle
- 61: Auswerte- und Anzeigeeinheit
- p₁: Vordruck
- p₂: Nachdruck

## Patentansprüche

1. Positionssensorsystem mit einem Regler ohne Hilfsenergie (1), der zum Regeln einer Arbeitsfluidströmung ausgelegt ist, wobei der Regler ohne Hilfsenergie (1) eine geschlossene Gehäusestruktur aufweist, wobei das Positionssensorsystem eine Sensoreinheit aufweist, die ein Magnetfeld einer Magnetfeldquelle des Reglers ohne Hilfsenergie (1) erfassen kann und einen Träger aufweist, an dem ein Magnetsensor der Magnetsensoreinheit getragen ist, wobei der Träger dazu ausgelegt ist, an eine Gehäusestruktur des Reglers ohne Hilfsenergie (1) andockbar zu sein, um eine ortsfeste Position des Sensors relativ zu dem Reglergehäuse zu definieren.

2. Positionssensorsystem nach Anspruch 1, wobei der Regler ohne Hilfsenergie (1) ein Stellventil (3) und einen Stellantrieb (5) umfasst, der zum Betätigen des Stellventils (3) ausgelegt ist, Versorgungsenergie für die Bereitstellung von Betätigungskraft ausschließlich von der Arbeitsfluidströmung und/oder dem Arbeitsfluid zu erhalten, wobei der Regler ohne Hilfsenergie eine Magnetfeldquelle aufweist, die derart mit dem Stellventil (3) gekoppelt ist, dass sie der Bewegung des Stellventils (3) folgt, um deren Bewegung mittels eines Magnetsensors (53) zur Erfassung der Stellung des Stellventils zu ermitteln.

3. Positionssensorsystem nach Anspruch 1 oder 2, **dadurch gennzeichnet,** dass die Magnetfeldquelle an einer mit dem Stellventil (3) kraftschlüssig gekoppelten Stellstange (41) befestigt ist, wobei eine Montagestelle an der Stellstange (41) im Bereich eines axialen, dem Stellventil (3) gegenüberliegenden Endes (45) an einem von dem Stellventil (3) abgewandten Seite des Stellantriebs (5) der Stellstange (41) und/oder an einer von dem Stellventil (3) abgewandten Seite des Stellantriebs (5) positioniert ist.

4. Positionssensorsystem nach Anspruch 1, 2 oder 3, **dadurch gennzeichnet,** dass die Magnetfeldquelle innerhalb eines geschlossenen Gehäuses des Reglers untergebracht ist, wobei das Gehäuse zumindest benachbart der Magnetfeldquelle aus einem nicht-magnetischen Material gebildet ist.

5. Positionssensorsystem nach einem der vorstehenden Ansprüche, **dadurch gekennzeichnet, dass** der Regler ohne Hilfsenergie (1) einen Magnetsensor (53) umfasst, der derart außerhalb eines Gehäuses angeordnet ist, dass eine Relativbewegung zwischen dem Magnetsensor (53) und der Magnetfeldquelle erfassbar ist.

6. Positionssensorsystem nach einem der vorstehenden Ansprüche, **dadurch gekennzeichnet, dass** der Magnetsensor (53) mit einer Anzeige und/oder Auswerteeinrichtung (61) signalübertragungsgemäß gekoppelt ist, wobei die Kommunikation zwischen dem Magnetsensor (53), der Auswerteeinheit und/oder der Anzeige (61) über Kabel oder kabellos realisiert ist.

7. Positionssensorsystem nach einem der vorstehenden Ansprüche, **dadurch gekennzeichnet, dass** die Magnetfeldquelle an dem Stellventil (3) angebracht ist.

8. Positionssensorsystem nach einem der vorstehenden Ansprüche, **dadurch gekennzeichnet, dass** die Magnetsensoreinheit, bestehend aus der Magnetfeldquelle und dem Magnetsensor (53), eine eigene elektrische Energieversorgung aufweist.

9. Positionssensorsystem nach einem der vorstehenden Ansprüche, **dadurch gekennzeichnet, dass** der Magnetsensor (53) eine Kommunikationsschnittstelle (57) zum Übertragen von Daten an eine Leitstation aufweist, wobei die Kommunikationsschnittstelle (57) eine Einrichtung zum drahtlosen Senden von Positionsdaten aufweist.

10. Positionssensorsystem nach einem der vorstehenden Ansprüche, **dadurch gekennzeichnet, dass** die Magnetsensoreinheit dazu ausgelegt ist, die zur Identifikation des jeweiligen Reglers ohne Hilfsenergie (1) nötigen Daten auszulesen und/oder dass die Magnetsensoreinheit dazu ausgelegt ist, bei jeder Inbetriebnahme des Reglers ohne Hilfsenergie (1) einen Kalibrationslauf auszuführen, und/oder die Magnetsensoreinheit (53) einen Speicher zum Ablegen von Messdaten des jeweiligen Reglers ohne Hilfsenergie (1) aufweist.

## Claims

1. A position sensor system comprising a self-operated regulator (1) adapted to control a stream of working fluid, the self-operated regulator (1) having a closed housing structure, wherein the position sensor system comprising a sensor unit, which can detect a magnetic field of a magnetic field source of the self-operated regulator (1) and comprises a support on which a magnetic sensor of the magnetic sensor unit is supported, the support being adapted to be dockable to a housing structure of the self-operated regulator (1) to define a fixed position of the sensor relative to the housing of the regulator.

2. A position sensor system according to claim 1, wherein the self-operated regulator (1) comprises a control valve (3) and an control actuator (5) adapted to operate the control valve (3) to obtain supply power for providing actuating force exclusively from the stream of working fluid and/or the working fluid, wherein the self-operated regulator comprises a magnetic field source, which is coupled to the control valve (3) so as to follow the movement of the control valve (3) to detect its movement by means of a magnetic sensor (53) for detecting the position of the control valve.

3. Position sensor system according to Claim 1 or 2, **characterized in that** the magnetic field source is fastened to a control rod (41) that is force-fittingly coupled to the control valve (3), wherein an attachment position is arranged on the control rod (41) adjacent to an axial end (45) of the control rod (41) opposite to the control valve (3) and at a side of the control actuator (5) facing away from the control valve (3), or the attachment position is arranged at the side of the control actuator (5) facing away from the control valve (3).

4. Position sensor system according to Claim 1, 2 or 3, **characterized in that** the magnetic field source is accommodated inside a closed housing of the regulator, the housing being formed from a non-magnetic material at least adjacent to the magnetic field source.

5. Position sensor system according to one of the preceding claims, **characterized in that** the self-operated regulator (1) comprises a magnetic sensor (53) which is arranged outside a housing in such a way that a relative movement between the magnetic sensor (53) and the magnetic field source is detectable.

6. Position sensor system according to one of the preceding claims, **characterized in that** the magnetic sensor (53) is coupled to a display and/or evaluation device (61) in accordance with signal transmission, the communication between the magnetic sensor (53), the evaluation unit and/or the display (61) being implemented via cable or wireless.

7. Position sensor system according to one of the preceding claims, **characterized in that** the magnetic field source is arranged to the control valve (3).

8. Position sensor system according to one of the above claims, **characterized in that** the magnetic sensor unit, consisting of the magnetic field source and the magnetic sensor (53), comprised its own electrical power supply.

9. Position sensor system according to one of the above claims, **characterized in that** the magnetic sensor (53) comprises a communication interface (57) for transmitting data to a control station, wherein the communication interface (57) comprises means for wirelessly transmitting position data.

10. Position sensor system according to one of the preceding claims, **characterized in that** the magnetic sensor unit is designed to read out the data required for the identification of the respective self-operated regulator (1) and/or **in that** the magnetic sensor unit is designed to carry out a calibration run each time the self-operated regulator (1) is put into operation, and/or the magnetic sensor unit (53) comprises a memory for storing measurement data of the self-operated regulator (1).

## Revendications

1. Système capteur de position comprenant un régulateur sans énergie auxiliaire (1) conçu pour réguler un écoulement de fluide de travail, dans lequel le régulateur sans énergie auxiliaire (1) présente une structure de boîtier fermée, dans lequel le système capteur de position présente une unité de capteur capable de détecter un champ magnétique d'une source de champ magnétique du régulateur sans énergie auxiliaire (1) et présentant un support portant un capteur magnétique de l'unité de capteur magnétique, le support étant conçu pour pouvoir être ancré sur une structure de boîtier du régulateur sans énergie auxiliaire (1), afin de définir une position fixe du capteur par rapport au boîtier de régulateur.

2. Système capteur de position selon la revendication 1, dans lequel le régulateur sans énergie auxiliaire (1) comporte une vanne de réglage (3) et un actionneur (5) conçu pour obtenir de l'énergie d'alimentation pour la mise à disposition d'une force d'actionnement exclusivement à partir de l'écoulement de fluide de travail et/ou du fluide de travail en vue d'actionner la vanne de réglage (3), dans lequel le régulateur sans énergie auxiliaire présente une source de champ magnétique accouplée à la vanne de réglage (3) de manière à suivre le mouvement de la vanne de réglage (3), afin de déterminer le mouvement de celle-ci au moyen d'un capteur magnétique (53) pour détecter la position de la vanne de réglage.

3. Système capteur de position selon la revendication 1 ou 2, **caractérisé en ce que** la source de champ magnétique est fixée à une tige de réglage (41) accouplée de force à la vanne de réglage (3), dans lequel une zone de montage sur la tige de réglage (41) est positionnée dans la région d'une extrémité (45) opposée à la vanne de réglage (3) sur un côté de l'actionneur (5) de la tige de réglage (41) détourné de la vanne de réglage (3) et/ou sur un côté de l'actionneur (5) détourné de la vanne de réglage (3).

4. Système capteur de position selon la revendication 1, 2 ou 3, **caractérisé en ce que** la source de champ magnétique est installée à l'intérieur d'un boîtier fermé du régulateur, le boîtier étant constitué d'un matériau non magnétique au moins à proximité de la source de champ magnétique.

5. Système capteur de position selon l'une des revendications précédentes, **caractérisé en ce que** le régulateur sans énergie auxiliaire (1) comporte un capteur magnétique (53) disposé à l'extérieur d'un boîtier de manière à pouvoir détecter un mouvement relatif entre le capteur magnétique (53) et la source de champ magnétique.

6. Système capteur de position selon l'une des revendications précédentes, **caractérisé en ce que** le capteur magnétique (53) est accouplé à un affichage et/ou à un dispositif d'évaluation (61) par transmission de signaux, la communication entre le capteur magnétique (53), l'unité d'évaluation et/ou l'affichage (61) étant réalisée avec ou sans câble.

7. Système capteur de position selon l'une des revendications précédentes, **caractérisé en ce que** la source de champ magnétique est fixée sur la vanne de réglage (3).

8. Système capteur de position selon l'une des revendications précédentes, **caractérisé en ce que** l'unité de capteur magnétique, constituée de la source de champ magnétique et du capteur magnétique (53), présente une alimentation en énergie électrique distincte.

9. Système capteur de position selon l'une des revendications précédentes, **caractérisé en ce que** le capteur magnétique (53) présente une interface de communication (57) pour la transmission de données à une station de commande, dans lequel l'interface de communication (57) présente un dispositif pour l'envoi sans fil de données de position.

10. Système capteur de position selon l'une des revendications précédentes, **caractérisé en ce que** l'unité de capteur magnétique est conçue pour lire des données nécessaire à l'identification du régulateur sans énergie auxiliaire (1) respectif, pour exécuter un cycle d'étalonnage à chaque mise en marche du régulateur sans énergie auxiliaire (1), et/ou **en ce que** l'unité de capteur magnétique (53) présente une mémoire pour le stockage de données de mesure du régulateur sans énergie auxiliaire (1) respectif.
